# EUROPÄISCHE PATENTSCHRIFT

(11) **EP 1 014 043 B1**
(45) Veröffentlichungstag und Bekanntmachung des Hinweises auf die Patenterteilung: **06.11.2002**
(21) Anmeldenummer: 99124695.0
(22) Anmeldetag: 11.12.1999
(51) Int. Cl.: G01D 5/347, H01L 25/16

(54) **Abtastkopf**
Reading head
Tête de lecture

(30) Priorität: 23.12.1998 DE 19859670
(43) Veröffentlichungstag der Anmeldung: 28.06.2000
(73) Patentinhaber: Dr. Johannes Heidenhain GmbH, 83292 Traunreut (DE)
(72) Erfinder: Holzapfel, Wolfgang, 83119 Obing (DE); Mayer, Elmar, 83342 Tacherting/Reit (DE)

(56) Entgegenhaltungen:
- EP-A- 0 720 005
- DE-A- 4 425 636
- DE-A- 19 701 941
- DE-A- 19 720 300
- US-A- 5 155 355
- US-A- 5 534 693
- US-A- 5 666 196

## Beschreibung

Die Erfindung betrifft ein Messsystem gemäß dem Oberbegriff des Anspruches 1.

Aus der GB 1,504,691 und der korrespondierenden DE 25 11 350 A1 ist ein Messsystem bekannt, bei dem die Verschiebung einer ersten Baugruppe relativ zu einer zweiten Baugruppe ermittelt wird. Dafür sind zwei Gitter vorgesehen, die zueinander einen konstanten Abstand aufweisen und von denen je eines an einer Baugruppe befestigt wird. Wird das zweite Gitter mit divergentem Licht einer Lichtquelle bestrahlt, erzeugt das erste Gitter ein periodisches Abbild des zweiten Gitters, wobei sich dieses Abbild bewegt, wenn zwischen den beiden Baugruppen eine relative Bewegung vorliegt. Weiterhin sind Fotodetektoren vorgesehen, die eine periodische Struktur aufweisen und fest mit der zweiten Baugruppe verbunden sind. Dabei ist das erste ein reflektierendes Gitter und das zweite Gitter und die Fotodetektoren liegen im wesentlichen in einer Ebene. Die Lichtquelle und das zweite Gitter können auch durch eine strukturierte Lichtquelle ersetzt werden, die das gleiche Abbild wie eine herkömmliche Lichtquelle und ein Gitter erzeugen. Die Struktur der Fotodetektoren interagiert mit dem Abbild derart, dass eine periodische Änderung des Ausgabesignals der Fotodetektoren auftritt, wenn zwischen erster und zweiter Baugruppe eine Relativbewegung vorliegt.

Dabei ist von Nachteil, dass nicht offenbart wird, wie die konkrete Anordnung zu realisieren ist. Weiterhin nachteilig ist, dass die Fotoelemente immer einseitig neben der Lichtquelle angeordnet sind, wodurch eine erhöhte Kippempfindlichkeit des Abtastkopfes resultiert. Aus der Veröffentlichung ist weiterhin nicht bekannt, dass das zweite Gitter und der strukturierte Fotodetektor den möglichst gleichen Abstand zum ersten Gitter aufweisen müssen, um eine optisch hochwertige Abbildung zu ermöglichen. Dies ist jedoch bei der Anordnung aus dem Stand der Technik fertigungstechnisch sehr schwer zu realisieren.

Aus der DE 197 01 941 A1 ist bekannt, dass auf der einem Maßstab zugewandten Seite eines lichtdurchlässigen Trägers ein Abtastgitter angeordnet ist. Das Abtastgitter wird von einer Lichtquelle derart bestrahlt, dass ein Abbild des Gitters auf den Maßstab projiziert wird. Auf dem Maßstab befindet sich ein zweites Gitter, welches das Abbild auf einen strukturierten Fotodetektor reflektiert. Dabei sind der lichtdurchlässige Träger für das erste Gitter mit dem Halbleitermaterial, in dem der strukturierte Fotodetektor realisiert ist, miteinander derart verbunden, dass Abtastgitter und Fotodetektor ausschließlich in Messrichtung zueinander versetzt sind, vom Maßstab aber die gleiche Entfernung aufweisen. In einer zweiten Ausführungsform der DE 197 01 941 A1 ist das Abtastgitter auf der dem Maßstab abgewandten Seite des lichtdurchlässigen Trägers angeordnet. Auf der gleichen Seite wie das Abtastgitter ist ein Optochip auf dem gleichen lichtdurchlässigen Träger angeordnet, welches den Fotodetektor beinhaltet. Auch durch diese Anordnungen wird erreicht, dass Abtastgitter und strukturierter Fotodetektor ungefähr den gleichen Abstand vom Maßstab aufweisen.

Bei der ersten Ausführungsform besteht der Nachteil, dass der lichtdurchlässige Träger, auf dem das Abtastgitter aufgebracht ist, mit dem Halbleitermaterial, in dem der strukturierte Fotodetektor realisiert ist, verbunden werden muss. Diese Verbindung muss sehr genau erfolgen, so dass die Struktur des Fotodetektors parallel zum Gitter ausgerichtet ist und Struktur und Gitter den gleichen Abstand vom Maßstab aufweisen. Diese exakte Verbindung zwischen Träger und Halbleitermaterial ist daher sehr schwierig zu realisieren. Weiterhin weist die zweite Ausführungsform den Nachteil auf, dass ein Optochip auf dem lichtdurchlässigen Träger befestigt werden muss. Durch die Befestigung in Chip-on-Glass Technologie entsteht zwangsläufig ein Abstand zwischen dem Optochip und dem Träger, wodurch der Abstand zwischen Abtastgitter und Maßstab sowie zwischen Fotodetektor und Maßstab wesentlich voneinander abweichen, was zu einer deutlichen Verschlechterung der optischen Eigenschaften der Anordnung führt.

Aus der DE 40 91 517 T1 (US 5155355) ist bekannt, einen Abtastkopf für ein Messsystem aus einem einzigen Block aus Halbleitermaterial zu realisieren. Dabei sind auf der Oberfläche einer flächig ausgestalteten Leuchtdiode als Gitterlinien ausgestaltete Fotoelemente vorgesehen, durch welche die Leuchtdiode nicht hindurchstrahlen kann. Dadurch entsteht ein strukturierter Fotodetektor, über bzw. unter dem eine strukturierte Lichtquelle angeordnet ist. Dadurch werden die Strukturierung der Lichtquelle und die strukturierten Fotoelemente in den gleichen Abstand zum Maßstab gebracht.

Dieser Abtastkopf weist aber den Nachteil auf, dass die Fotodetektorstruktur direkt von der Lichtquelle divergent bestrahlt wird und dadurch ein hoher Untergrundsignalpegel an den Fotoelementen entsteht. Dies ist sogar dann erforderlich, wenn die Fotoelemente rückseitig durch eine Metallschicht geschützt werden, da die Kanten der Fotoelemente weiterhin empfindlich sind. Ein weiterer Nachteil ist, dass die Fotoelemente als dünne Schichten auf ein Trägersubstrat aufgebracht werden müssen, da dies ein sehr aufwendiges Verfahren ist und zu keinen qualitativ hochwertigen Fotoelementen führt.

Aus der PCT/EP98-04658 (WO 99/08074) der Anmelderin ist eine Messeinrichtung bekannt, die neben periodischen Inkrementalsignalen auch mindestens ein Referenzimpulssignal bei einer definierten Referenzposition eines Maßstabs und einer relativ dazu beweglichen Abtasteinheit liefert. Auf dem Maßstab ist mindestens ein Referenzmarkenfeld in eine Inkrementalteilung integriert angeordnet und die Abtasteinheit umfasst eine Detektoranordnung, die in Messrichtung mindestens drei benachbart angeordnete, aktive Detektorbereiche aufweist. Zwei der Detektorbereiche werden als Referenzimpulssignal-Detektoren benutzt und erzeugen ein Referenzimpulssignal, wobei die Relativanordnung der Referenzimpulssignal-Detektoren in Messrichtung in Abhängigkeit von der Strukturierung des Referenzmarkenfeldes auf dem Maßstab erfolgt. Ein zwischen den Referenzimpulssignal-Detektoren angeordneter Detektor dient zur Erzeugung mindestens eines Inkrementalsignals. Weiterhin sind verschiedene Maßnahmen zur Filterung des Inkrementalsignalanteils aus dem Referenzimpulssignal vorgesehen.

Aus der DE 197 20 300 A1 ist ein elektronisches Hybridbauelement bekannt, bei dem in Chip on Chip Anordnung ein implantiertes Chip auf einem Trägersubstrat angeordnet wird. Dafür weist das Trägersubstrat mindestens eine Kavität auf, in der sich eine elektrische Isolationsschicht mit einer darüber liegenden Metallschicht befindet. Der in die Kavität implantierte Chip wird mit der Metallschicht kontaktiert, wodurch diese als elektrische Leitung verwendet wird. Ist der implantierte Chip eine Leuchtdiode, kann die Metallisierungsschicht auch dazu benutzt werden, deren Strahlung an den Wänden der Kavität zu reflektieren.

Diese Anordnung weist den Nachteil auf, dass sowohl die Strahlungsrichtung der Leuchtdiode als auch deren elektrischen Kontakte auf einer Seite des Halbleitersubstrats angeordnet sind bzw. auf dieser einen Seite emittiert werden.

Aus der EP 543 513 A1 ist bekannt, dass auf einem gemeinsamen Halbleitersubstrat aus III/IV-Halbleitermaterial, wie beispielsweise Gallium-Arsenid Ga-As, sowohl ein strukturierter Fotodetektor als auch eine strukturierte Lichtquelle in Form von mindestens einer Leuchtdiode eines Abtastkopfes realisiert werden. Durch diese Realisierung der strukturierten Lichtquelle und des strukturierten Fotodetektors auf einem gemeinsamen Halbleitermaterial kann die Forderung, dass die Sende- und Empfangsstrukturierung möglichst in einer Ebene zu realisieren ist, sehr gut erfüllt werden. Weiterhin erfolgt eine Einfeldabtastung, bei der die Fotoelemente um α + k* 360°, mit ganzzahligem k und α bevorzugt 90°, 270°, 120° oder 240°, versetzt sind. Es werden also mehrere Fotoelemente um neunzig Winkelgrad plus ganzzahlige Vielfache von dreihundertsechzig Winkelgrad in Messrichtung zueinander versetzt angeordnet. Dadurch wird die Abtastung besonders störunempfindlich.

Dabei ist von Nachteil, dass nicht beschrieben wird, wie die Herstellung des strukturierten Fotodetektors und der strukturierten Lichtquelle auf einem gemeinsamen Halbleitermaterial aus Ga-As erfolgt. Werden aus dem Stand der Technik bekannte Technologien der Halbleiterherstellung angewandt, so ist dieser Herstellungsprozess sehr aufwendig und damit teuer, da dicke Epitaxieschichten mit unterschiedlichem Aluminiumgehalt nebeneinander, d.h. strukturiert auf das Halbleitersubstrat aufgebracht werden müssen. Nur dadurch kann die Emissionswellenlänge der Leuchtdiode gegenüber der Absorptionskante der Fotoelemente so verschoben werden, dass nennenswerte Signalströme erzeugt werden können.

In den Druckschriften EP 720 005 A2 und US 5 534 693 A, welche zur Bildung des Oberbegriffes des Anspruches 1 herangezogen wurden, sind Messsysteme offenbart, die einen Maßstab mit einer Teilung und einem Abtastkopf umfassen. Der jeweilige Abtastkopf weist mehrere Fotodetektoren auf, die jeweils auf einem Trägerkörper liegen. Die Trägerkörper haben ihrerseits Ausnehmungen durch welche das Licht der Lichtquellen in Richtung eines Sendegitters strahlt. Nachteilig an den Ausführungen in EP 720 005 A2 und US 5 534 693 A ist, dass die Fotodetektoren als separate Bauteile und in einem separaten Herstellungsprozess auf die Trägerkörper aufgebracht werden müssen. Die Trägerkörper in den oben genannten Schriften sind beispielsweise bevorzugt aus einem glasfaserverstärktem Epoxymaterial, wie es für die Herstellung von Leiterplattensubstraten üblich ist. Die bekannten Abtastköpfe der Messsysteme sind deshalb vergleichsweise aufwändig in der Herstellung und weisen bezüglich Miniaturisierungsbestrebungen und im Hinblick auf Präzisionsanforderungen eindeutige Nachteile auf.

Es stellt sich daher die Aufgabe, ein Messsystem anzugeben, bei dem das Herstellungsverfahren für den Abtastkopf möglichst kostengünstig ist. Der derartige Abtastkopf soll insbesondere in Winkel- und Längenmesssystemen verwendet werden können.

Diese Aufgabe wird durch ein Messsystem mit den kennzeichnenden Merkmalen des Anspruchs 1 gelöst.

Vorteilhafte Ausführungsformen der erfindungsgemäßen Anordnung ergeben sich aus den Merkmalen der abhängigen Ansprüche und der Beschreibung.

Das erfindungsgemäße Messsystem weist den Vorteil auf, dass die Strukturierung bzw. das Empfangsgitter für den Fotodetektor ebenso wie die Strukturierung bzw. das Sendegitter für die Lichtquelle zumindest im wesentlichen den gleichen Abstand von dem abzutastenden Maßstab aufweisen. Dadurch können optimale optische Eigenschaften des Abtastkopfes sichergestellt werden. Weiterhin von Vorteil ist, dass die Strukturierungen bzw. Gitter in Verfahrensschritten erzeugt werden, die aus der Halbleitertechnik sehr gut bekannt sind. Dadurch können diese mit sehr großer Genauigkeit und sehr kostengünstig mit nur wenig Ausschuss durchgeführt werden. Ein weiterer Vorteil besteht darin, dass Fotodetektoren und die als Lichtquelle benutzte Leuchtdiode aus unterschiedlichen Halbleitermaterialien hergestellt werden können. Besonders vorteilhaft kann das erfindungsgemäße Messsystem in Präzisionsmesssystemen zur Winkel- und Längenmessung eingesetzt werden, die bevorzugt bei numerisch gesteuerten Maschinen zum Einsatz kommen.

Einzelheiten der Erfindung werden im folgenden anhand der in der Zeichnung dargestellten Ausführungsformen näher erläutert.

Es zeigt:
- Figur 1: eine dreidimensionale Ansicht des erfindungsgemäßen Messsystems mit einem Abtastkopf und mit einem Maßstab,
- Figur 2: einen Längsschnitt A-B durch den Abtastkopf aus Figur 1 gemäß einer ersten Realisierung,
- Figur 3: eine zweite mögliche Realisierung des Abtastkopfes aus Figur 1,
- Figur 4: eine dritte mögliche Realisierung des Abtastkopfes aus Figur 1,
- Figur 5: eine vierte mögliche Realisierung des Abtastkopfes aus Figur 1,
- Figur 6: eine fünfte mögliche Realisierung des Abtastkopfes aus Figur 1,
- Figur 7: eine sechste mögliche Realisierung des Abtastkopfes aus Figur 1,
- Figur 8: eine siebte mögliche Realisierung des Abtastkopfes aus Figur 1,
- Figur 9: eine achte mögliche Realisierung des Abtastkopfes aus Figur 1.

Das erfindungsgemäße Messsystem wird im folgenden anhand von Ausführungsbeispielen für ein Längenmesssystem erläutert. Es besteht jedoch die Möglichkeit, ohne wesentliche Änderungen, das erfindungsgemäße Messsystem auch bei einem Winkelmesssystem oder einem zweidimensionalen Messsystem einzusetzen.

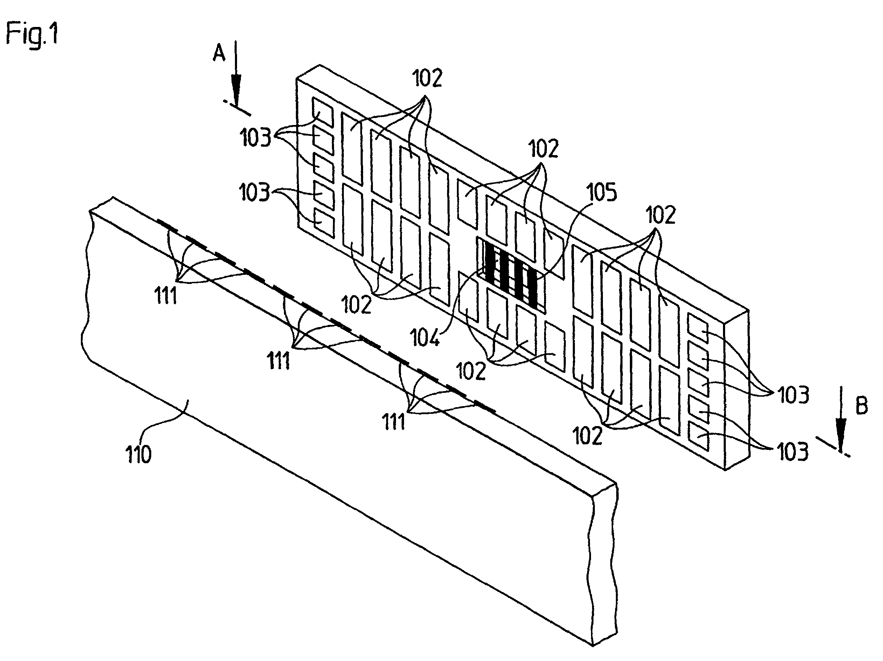

In Figur 1 ist der prinzipielle Aufbau des Abtastkopfes 101 mit zugehörigem Maßstab 110 dreidimensional dargestellt. Der Abtastkopf 101 weist Fotodetektoren 102 auf, durch die eine Einfeldabtastung der Teilung 111 des Maßstabs 110 ermöglicht wird. Hierfür werden die Fotodetektoren 102 um π/2 zuzüglich ganzzahlige Vielfache von 2π in Messrichtung zueinander versetzt auf dem Abtastkopf angeordnet und die Anzahl der Fotodetektoren 102 wird in jeder Reihe als ein ganzzahliges Vielfaches von vier gewählt. Dadurch wird sichergestellt, dass eine gesamte Periode des Empfangssignals detektiert wird. Die Fotodetektoren 102 sind auf dem Abtastkopf in einer oberen und einer unteren Reihe angeordnet, deren Ausgangssignale ebenfalls derart miteinander verknüpft werden, dass Schwankungen in deren Ausgangssignalen, beispielsweise wegen einer Verkippung des Abtastkopfes, kompensiert werden.

Die Fotodetektoren 102 weisen eine in Figur 1 nicht dargestellte Struktur auf, die durch ein über den Fotodetektoren 102 angeordnetes Gitter realisiert wird, falls ein einzelner Fotodetektor 102 durch einen einzigen PN-Übergang, oder durch eine Strukturierung der Fotodetektoren 102 selbst realisiert wird, wenn mehrere PN-Übergänge zu einem Fotodetektor 102 zusammengeschaltet werden.

Im Zentrum der Fotodetektoren 102 ist das Halbleitersubstrat vollständig entfernt, was mittels anisotropen Ätzverfahren oder Ultraschallbohren möglich ist. An dieser Stelle ist eine Lichtquelle, bevorzugt realisiert durch eine Leuchtdiode 104, vorgesehen. Diese Leuchtdiode 104 wird bevorzugt rückseitig kontaktiert. Über der Leuchtdiode 104 auf Höhe der Oberfläche des Fotodetektoren 102 ist ein Sendegitter 105 angeordnet, so dass durch die Lichtquelle 104 und das Gitter 105 eine strukturierte Lichtquelle realisiert wird. Am Rand des Abtastkopfes 101 sind Kontakte 103 vorgesehen, über die die Fotodetektoren 102 und eventuell auch die Lichtquelle 104 kontaktiert werden können. Da die Leuchtdiode 104 nicht im gleichen Halbleitersubstrat wie die Fotodetektoren 102 realisiert wird, besteht die Möglichkeit, ein anderes Halbleitermaterial für die Leuchtdiode 104 zu verwenden.

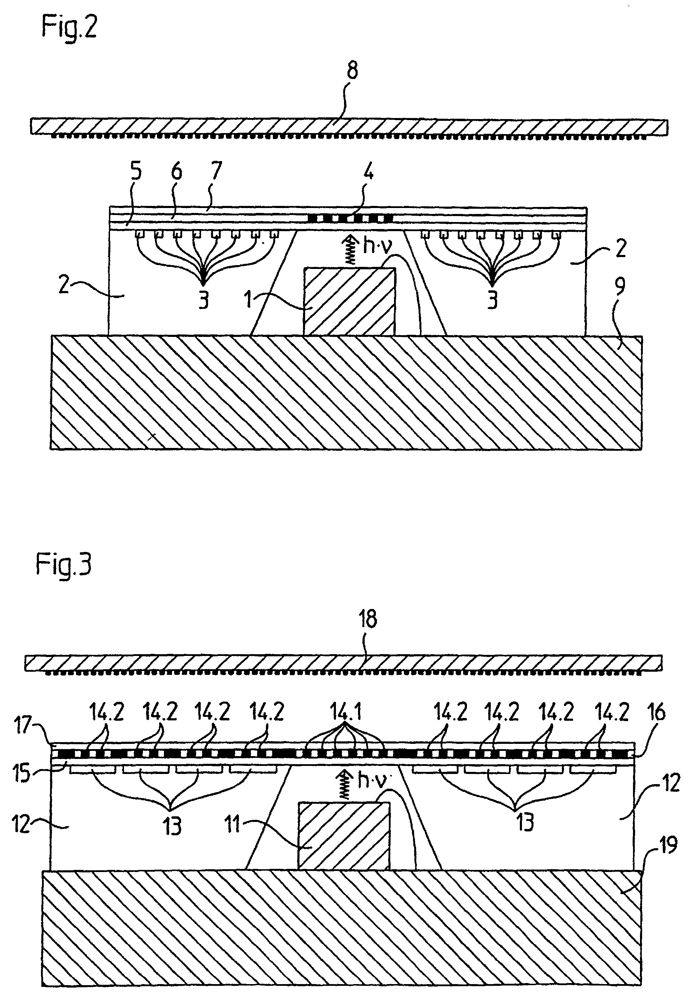

In Figur 2 ist ein Schnitt durch eine Ausführungsform des Abtastkopfes 101 entlang der Linie A-B aus Figur 1 dargestellt. Auf einer Grundplatte, die eine Platine 9 einer elektrischen Schaltung sein kann, ist der Abtastkopf angeordnet. Auf diese Platine 9 ist eine Lichtquelle in Form einer Leuchtdiode 1 aufgelötet, der über die Platine 9 ihre Versorgungsspannung zugeleitet wird. Die Leuchtdiode 1 ist als separate Schaltung realisiert, so dass deren Halbleitermaterial nicht mit dem des Abtastkopfes übereinstimmen muss. Die Leuchtdiode 1 kann in Flip-Chip Technologie Kontakte zur Platine 9 aufweisen. Alternativ kann die Leuchtdiode 1 auch über eine Bondverbindung mit der Platine verbunden sein. Auf der Platine 9 befindet sich weiterhin das Halbleitersubstrat 2, für das vorzugsweise Silizium verwendet wird. An der Stelle, an der die Leuchtdiode 1 vorgesehen ist, wurde das Halbleitersubstrat vollständig durchgeätzt, so dass die Leuchtdiode 1 hindurchstrahlen kann. Die Seitenwände dieses Sacklochs sind dabei leicht geneigt, wodurch sie wie ein Lichtleiter wirken. Dadurch kann die Lichtstrahlung der Leuchtdiode 1 auf das Sendegitter fokussiert werden.

Auf der dem Maßstab 8 zugewandten Seite des Halbleitersubstrats 2 sind mehrere Fotodioden 3 vorgesehen, die senkrecht zur Messrichtung eine längliche Form aufweisen. Durch die derart ausgeformten Fotodioden 3 wird die Strukturierung der zu meistens mehreren Fotodetektoren verschalteten Fotodioden 3 erreicht. Der Abstand zwischen zwei Fotodioden 3 eines Fotodetektors muss dabei der Gitterkonstante des ansonsten erforderlichen Empfangsgitters entsprechen, das nunmehr aufgrund der Strukturierung der Fotodioden 3 eingespart werden kann. Mehrere Fotodioden 3 werden zu einem Fotodetektor verschaltet; die Fotodetektoren weisen, wie bereits erläutert einen Abstand von π/2 zuzüglich ganzzahlige Vielfache von 2π bezüglich der Periode der Empfangsstruktur auf und sind damit fingerartig miteinander verschaltet, wodurch eine besonders vorteilhafte Einfeldabtastung ermöglicht wird. Durch diese Verschaltung der Fotodetektoren wird eine Einfeldabtastung des Maßstabs 8 erreicht, wobei auch mit anderen Abständen als π/2 eine Einfeldabtastung realisierbar ist. Die Fotodioden 3 weisen einen bestimmten Abstand von einem Sackloch auf, durch die das Licht der Leuchtdiode 1 strahlt, damit das in diesem Bereich auf das Halbleitersubstrat treffende Licht der Leuchtdiode 1 nicht zu einem Strom in den Fotodioden 3 führen kann.

Auf der dem Maßstab 8 zugewandten Seite des Halbleitersubstrats 2 ist eine Oxidschicht 5 aus für Licht transparentem Siliziumdioxid vorgesehen. Über dieser ist eine Metallisierungsschicht 6 angeordnet, die im Bereich des Sacklochs des Halbleitersubstrats 2 das Sendegitter 4 beinhaltet. An diesem Sendegitter 4 erfolgt eine Strukturierung des durch die Leuchtdiode 1 abgestrahlten Lichts, welches durch die optische Öffnung des Sacklochs hindurchgetreten ist. Über der Metallisierungsschicht 6 ist eine Passivierungsschicht 7 vorgesehen. Sämtliche Schichten 5 und 7 sind für die von der Leuchtdiode 1 ausgestrahlte Strahlung transparent.

Die Metallisierungsschicht 6 kann auch dazu benutzt werden die Fotodetektoren zu kontaktieren und um ein Sende- und/oder ein Empfangsgitter zu realisieren, falls die Strukturierung der Fotodioden nicht fein genug realisiert werden kann. Die Metallisierungsschicht 6 ist dabei lichtundurchlässig.

Das am Sendegitter 4 strukturierte Licht trifft anschließend auf den Maßstab 8, von dessen Teilung es teilweise zu den Fotodioden 3 hin reflektiert wird. Am Ort der Fotodetektoren entsteht durch die Wechselwirkung zwischen Lichtbündel, dem Sendegitter und dem Maßstab 8 ein Streifenbild, das bei einer relativen Verschiebung zwischen Abtastkopf und Maßstab 8 tritt aufgrund der Reflexion am Maßstab 8 an den Fotodioden 3 eine sinusförmig wechselnde Lichtintensität auf, die zu einem sinusförmig wechselnden Fotostrom führt. Dieser wird von den Fotodioden 3 einer Auswerteschaltung zugeleitet, die daraus den Wert der Verschiebung ermittelt.

Das bei der vorliegenden Erfindung angewandte Abtastverfahren ist aus dem Stand der Technik bereits prinzipiell bekannt. Es existieren zwei Möglichkeiten, die als geometrisches Bild und als Beugungsbild bezeichnet werden. Der optische Aufbau zu diesen Bildern unterscheidet sich im wesentlichen durch die Wahl des Maßstabgitters: Im geometrischen Bild wird das Maßstabgitter als Amplitudengitter ausgeführt, dessen Gitterkonstante doppelt so groß wie die des Sendegitters ist. Alternativ kann das Amplitudengitter auch durch ein Phasengitter mit 90° Phasenhub bei unveränderter Gitterkonstante ersetzt werden. Im Beugungsbild wird das Maßstabgitter vorteilhafterweise als Phasengitter mit 180° Phasenhub ausgeführt, dessen Gitterkonstante mit der des Sendegitters übereinstimmt. Sowohl im geometrischen Bild als auch im Beugungsbild sind die Gitterkonstanten von Sende- und Empfangsgitter identisch. Für alle Abtastvarianten ergeben sich typische Abhängigkeiten der Signalmodulation vom Abtastabstand, wie sie im Stand der Technik beschrieben sind. Dementsprechend ist ein günstiger Abtastabstand zu wählen.

Grundsätzlich können bei allen, oben erwähnten Varianten die Abstände zwischen Sendegitter und Maßstab und zwischen Maßstab und Empfangsgitter unterschiedlich gewählt werden. Die Abstandstoleranzen im Falle eines Auflichtgebers sind aber wesentlich größer bei gleichen Abständen, d.h. wenn das Sende- und Empfangsgitter vom Maßstab gleich beabstandet sind. Diese Anforderung ist um so stärker, je größer die wirksamen Flächen des Sende- und Empfangsgitters sind. In der Praxis bedeutet dies, dass beide Flächen innerhalb von ± 20 µm, idealerweise aber innerhalb von ± 5 µm fluchten müssen.

Das Licht, das auf die strukturierten Fotoelemente fällt, wird innerhalb einer gewissen Eindringtiefe, die von der Wellenlänge abhängt absorbiert. Typische Werte sind 5 µm bis 40 µm. Dies bedeutet, dass bei einem strukturierten Fotodetektor der effektive Abstand zum Maßstab um typisch 2 µm - 20 µm größer ist, als der Abstand seiner Oberfläche zum Maßstab. Dies kann durch eine gegenüber dem Sendegitter leicht vergrößerte Gitterkonstante des Empfangsgitters berücksichtigt werden, wie es die oben zitierten Gesetzmäßigkeiten beschreiben. In diesem Fall ist mit einer eingeschränkten Abstandstoleranz des Gebers zu rechnen. Günstiger ist es jedoch, über dem strukturierten Fotodetektor gleichzeitig ein Empfangsgitter anzubringen, dessen Spaltöffnungen etwas kleiner sind, als die Breiten der darunter liegenden Einzelfotodioden. Auf diese Weise wird die wirksame Abtastebene exakt in die Ebene des Empfangsgitters gelegt, welches wiederum exakt mit dem Sendegitter fluchtet. Da die divergenten Lichtbündel an den größeren Teilen des Empfangsgitters bereits erhebliche Neigungswinkel aufweisen, sollten die Einzeldioden unter den Spaltöffnungen etwas gegenüber den nach außen verschoben werden. Dies entspricht einer geringfügig größeren Periode der strukturierten Fotodetektoren im Vergleich zum Empfangsgitter.

In Figur 3 ist eine weitere Ausführungsform des Detektors dargestellt. Sollte die für das Empfangsgitter erforderliche Gitterkonstante aufgrund der geforderten Abmessungen nicht durch separate Fotodioden realisierbar sein, kann auch ein zusätzliches Empfangsgitter 14.2 vorgesehen werden. Wie in Figur 2 ist auch in Figur 3 auf einer Grundplatte 19 ein Halbleitersubstrat angeordnet. Dieses weist ein Sackloch auf, in der eine Leuchtdiode 11 als Lichtquelle angeordnet ist. Auf der dem Maßstab 18 zugewandten Seite des Halbleitersubstralts 12 sind Fotodioden 13 angeordnet, deren Breite aber größer ist als die Gitterkonstante des erforderlichen Empfangsgitters. Daher ist in der Metallisierungsschicht 16, die sich wieder über der transparenten Passivierungsschicht 15 befindet, nicht nur ein Sendegitter 14.1, sondern für die Fotodioden 13 ein Empfangsgitter vorgesehen. Über der Metallisierungsschicht 16 ist wieder eine transparente Passivierungsschicht 17 angeordnet. Bei dieser Ausführungsform wird ein Fotodetektor vorteilhaft durch einen PN-Übergang realisiert. Es besteht aber auch die Möglichkeit, dass mehrere PN-Übergänge zu einem Fotodetektor zu verschaltet werden. Das Empfangsgitter 14.2 ist dann für jeden Fotodetektor um π/2 in Messrichtung versetzt anzuordnen.

Das durch die Leuchtdiode 11 abgestrahlte Licht wird zunächst, wie in Figur 2, am Sendegitter 14.1 strukturiert und fällt auf den Maßstab 18, von dessen Teilung es teilweise zum Empfangsgitter 14.2 hin reflektiert wird. Der in der Ebene des Empfangsgitter 14.2 entstehende Intensitätsverlauf des Lichts wird durch die Struktur des Empfangsgitters abgetastet, so dass bei einer Relativbewegung zwischen Maßstab 18 und Abtastkopf die Intensität und damit der Fotostrom schwankt, abhängig von der Relativverschiebung, die durch eine Auswertung des Stroms ermittelt werden kann.

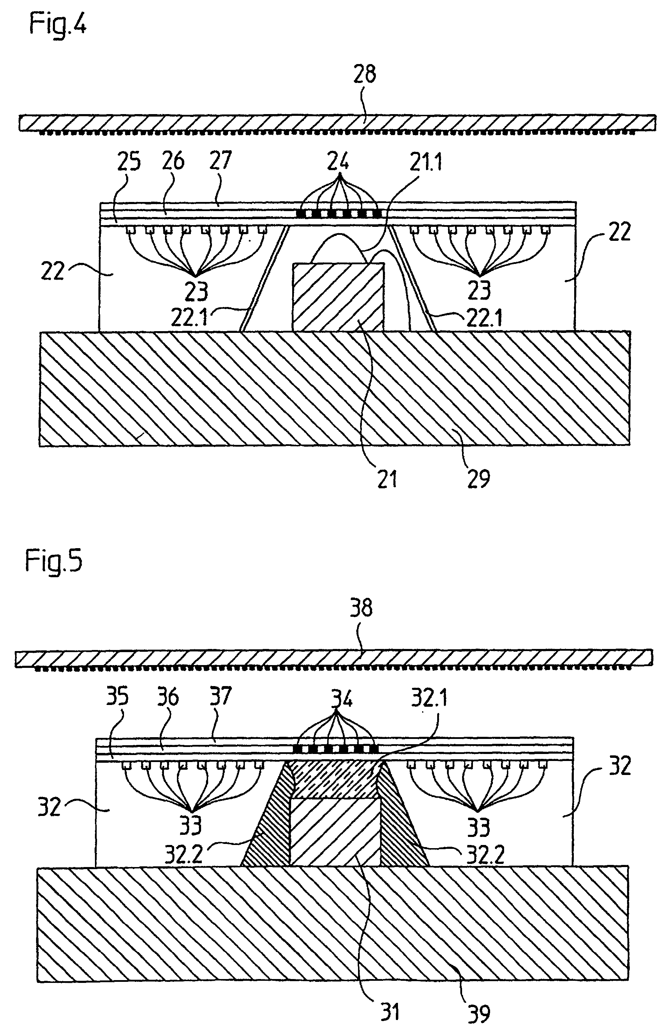

In Figur 4 ist eine weitere vorteilhafte Ausgestaltung des Abtastkopfes dargestellt. Im Unterschied zu Figur 2 weist dieses Ausführungsbeispiel auf der Leuchtdiode 21 eine zusätzliche optische Baugruppe 21.1 auf. Diese fokussiert das durch die Leuchtdiode 21 abgestrahlte Licht in Richtung des Sendegitters 24. Weiterhin ist eine Beschichtung 22.1 der Seitenwände des Sacklochs vorgesehen, welche Licht reflektieren soll. Durch diese Maßnahmen wird verhindert, dass Licht, welches von der Leuchtdiode 21 nicht unmittelbar in Richtung des Sendegitters 24 abgestrahlt wurde, im Halbleitermaterial 22 Elektron-Lochpaare und dadurch einen Strom verursacht, der den Strom der Fotodioden 23 überlagert. Dadurch kann das Nutz- zu Störsignalverhältnis des Abtastkopfes verbessert werden.

Weiterhin besteht die Möglichkeit, ein niederohmiges Halbleitermaterial 22 zu wählen, so dass die Rekombinationszeiten der durch das Licht der Leuchtdiode 21 erzeugten Elektron-Lochpaare so kurz ist, dass keine nennenswerte Anzahl zu den Fotodioden 23 diffundieren und dort einen fehlerhaften Strom verursachen können.

Eine weitere Maßnahme, um durch die Leuchtdiode 31 verursachte Störströme zu verhindern, ist in Figur 5 dargestellt. Auf einer Grundplatte 39 ist das Halbleitersubstrat 32 angeordnet. Dieses weist ein Sackloch, begrenzt durch die Oxidschicht 35 auf. Auf der dem Maßstab 38 zugewandten Seite des Halbleitersubstrats sind wieder Fotodioden 33 vorgesehen. Die Leuchtdiode 31 ist nunmehr mittels eines weichen, optisch transparenten Klebers, der das von der Leuchtdiode 31 ausgestrahlte Licht nicht streut sondern bündelt, auf die Oxidschicht 35 geklebt und über elektrische Leitungen mit der Grundplatte 39 verbunden. In den nach der Klebung vom Kleber 32.1 nicht ausgefüllten Raum des Sacklochs wird ein opaker Füllstoff 32.2 eingebracht, der eine optische Isolation zwischen Leuchtdiode 31 und dem Halbleitersubstrat 32 bewirkt. Lediglich das vom Sendegitter 34 strukturierte und durch die Teilung des Maßstabs 38 teilweise reflektierte Licht der Leuchtdiode 31 gelangt zu den Fotodioden 33 des Halbleitersubstrats. Die Schichten 35, 36 und 37 sind wieder transparent, sofern kein Sendegitter 34 im optischen Weg angeordnet ist. Auch bei dieser Anordnung wird sichergestellt, dass nur sehr wenig Licht von der Leuchtdiode 31 direkt in das Halbleitersubstrat 32 abgestrahlt wird und zu Störströmen führt.

Alternativ zu den Leitungen zwischen Leuchtdiode 31 und Platine 9 besteht die Möglichkeit, die Oxidschicht 35 zwischen Leuchtdiode 31 und Sendegitter 34 zu entfernen und mittels leitendem Kleber 32.1 die Kontakte der Leuchtdiode 31 für die Versorgungsspannung an dem Sendegitter 34 aus leitenden Material oder an einer Kontaktstelle der Metallisierungsschicht 36 zu befestigen. Das Sendegitter 34 bzw. die Kontaktstellen mit deren Zuleitungen werden dann dazu benutzt, der Leuchtdiode 31 die Versorgungsspannung zuzuleiten und weist daher außerhalb seines optisch relevanten Bereichs Zuleitungen auf.

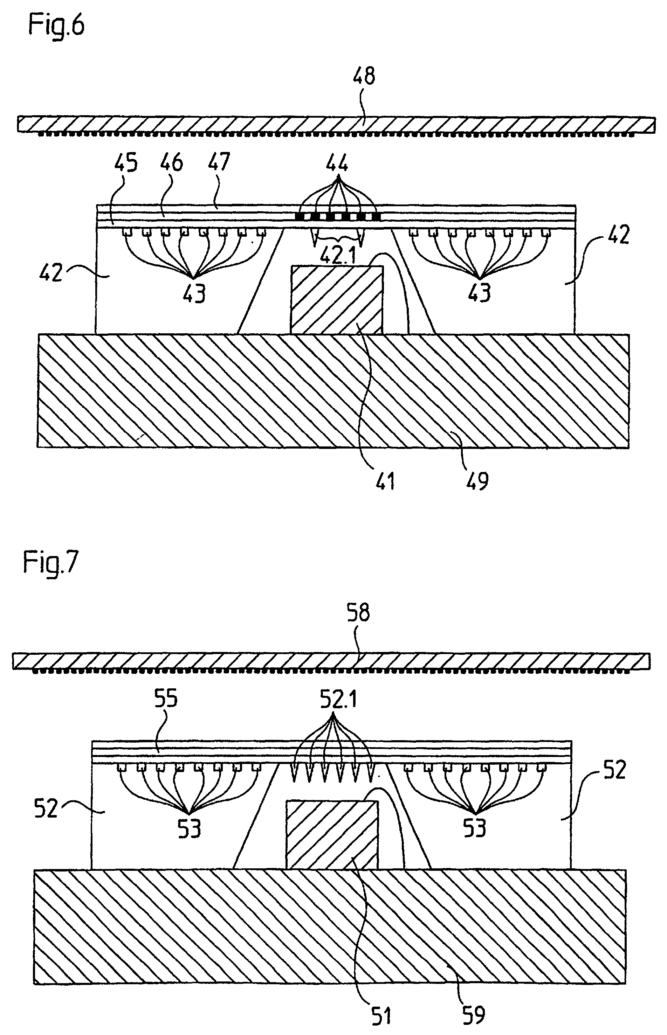

Eine bezüglich der mechanischen Stabilität verbessertes Ausführungsbeispiel ist in Figur 6 dargestellt. Für eine optimale optische Qualität des Abtastkopfes ist ein möglichst identischer Abstand von Sendegitter 44 und den strukturierten Empfängerdioden 43 jeweils zum Maßstab 48 anzustreben. Dafür muss die Oxidschicht 45 sehr dünn ausgeführt werden. Mit Werten von ca. 1-3 µm Dicke der Oxidschicht 45 ist dies durchaus möglich. Dabei ist jedoch zu bedenken, dass dadurch die mechanische Stabilität der Oxidschicht 45 und die Fähigkeit zusätzlich das Sendegitter 44 zu tragen, welches bevorzugt aus Aluminiumstegen besteht, die bei Halbleitern als elektrische Leiter verwendet werden, abnimmt.

Um die mechanische Stabilität zu erhöhen, ohne die Oxid- oder Passivierungsschicht 45 und 47 wesentlich dicker zu machen, sind nunmehr Stege 42.1 aus Halbleitermaterial vorgesehen, die beim Durchätzen stehen bleiben. Diese Stege 42.1 sind zwischen dem Sendegitter 44 und der Leuchtdiode 41 derart angeordnet, dass diese die optischen Eigenschaften der Anordnung möglichst nicht verändern. Die Lage, Breite und Orientierung der Stege 42.1 werden so gewählt, dass deren optische Wirkung auf die Abtastsignale, abgesehen von einer unvermeidlichen Signalreduktion, minimal bleibt.

Die Maskierung, die für die Ausbildung der Stege 42.1 notwendig ist, kann vorteilhaft bereits in der Maskierung für die rückseitige Sacklochätzung enthalten sein, so dass keine zusätzlichen Lithographieschritte erforderlich sind.

In einer vorteilhaften Weiterbildung gemäß Figur 7 der bereits beschriebenen Ausführungsformen erfolgt keine vollständige Durchätzung des Halbleitersubstrats 52, um einen Weg für das von der Leuchtdiode 51 abgestrahlte Licht zu schaffen, sondern es werden auf der dem Maßstab 58 zugewandten Seite des Halbleitersubstrats 52 Stege 52.1 belassen, durch die das Sendegitter realisiert wird. Dadurch erübrigt es sich, zusätzlich zu einer ersten Oxidschicht 55 eine weitere Metallisierungsschicht für das Sendegitter und eine weitere Passivierungsschicht wie in den vorhergehenden Ausführungsbeispielen vorzusehen. Die Stege 52.1 sind dabei im Abstand der für das Sendegitter gewünschten Gitterkonstanten vom Ätzprozess auszunehmen. Neben dem derart erzeugten Sendegitter werden wieder die strukturierten Fotodioden 53 mit dem für das Empfangsgitter gewünschten Abstand angeordnet und zu Fotodetektoren verschaltet.

Die auf der Grundplatte 59 angeordnete Leuchtdiode 51 strahlt in Richtung der bei dem Sackloch verbliebenen Stege 52.1, die als Sendegitter wirken und das Licht strukturieren. Das strukturierte Licht wird an der Teilung des Maßstabs 58 teilweise reflektiert und trifft auf die strukturierten Fotodioden 53, wo entsprechend einer Relativbewegung zwischen Maßstab 58 und Abtastkopf ein pulsierender Strom verursacht wird.

Diese Realisierung weist insbesondere den Vorteil auf, dass die strukturierten Fotodioden 53 und die beim Durchätzen verbliebenen Stege 52.1 exakt den gleichen Abstand zum Maßstab 58 aufweisen, was eine optimale optische Qualität der Anordnung ermöglicht.

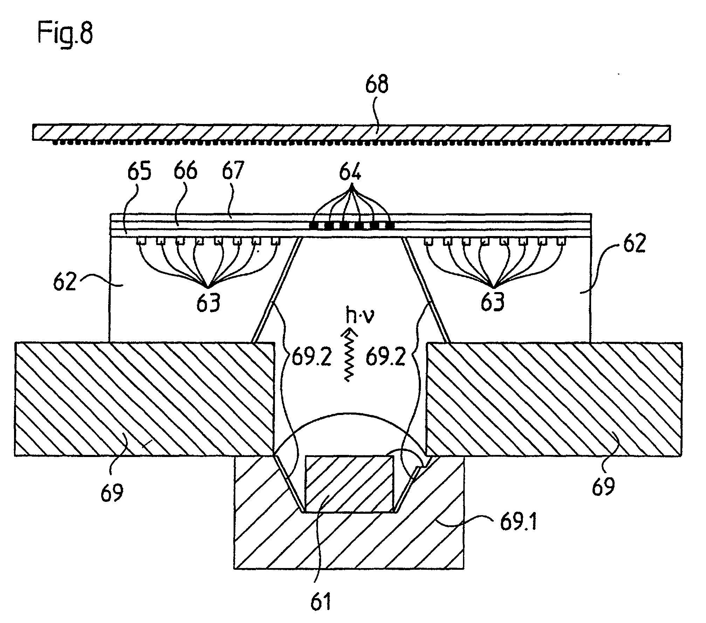

In einer weiteren Ausgestaltung gemäß Figur 8 wird die Leuchtdiode 61 nicht unmittelbar im Sackloch durch das Halbleitersubstrat 62 positioniert, sondern in einer speziellen Kavität 69.1. Dies kann durch eine entsprechende Gestaltung der Grundplatte 69 realisiert werden. Gegebenenfalls ist auch eine Ausfräsung aus der Grundplatte bereits ausreichend, um die Leuchtdiode 61 zu positionieren. Dadurch kann als Leuchtdiode 61 ein herkömmliches SMD-Bauteil benutzt werden. Vorteilhaft werden, wie bereits beschrieben, die Flächen, an die keine Strahlung der Leuchtdiode 61 gelangen soll, entsprechend beschichtet. Erfolgt diese Beschichtung 69.2 mit reflektierendem Material, kann dadurch nicht nur verhindert werden, dass Störströme entstehen, sondern zusätzlich die zum Sendegitter 64 hin abgestrahlte Licht-Leistung der Leuchtdiode 61 erhöht werden.

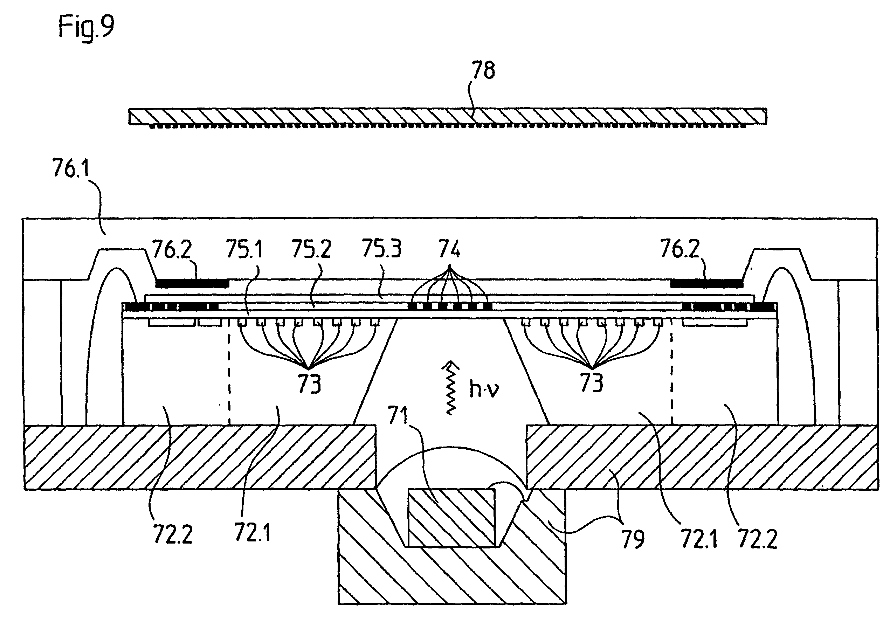

In Figur 9 ist eine Ausgestaltung des Abtastkopfes dargestellt, die weitere Baugruppen, insbesondere zur Verarbeitung der Ausgangssignale der Fotodioden 73, aufweist. Wie in den vorhergehenden Ausführungsbeispielen weist ein Halbleitersubstrat 72.1 ein Sackloch auf, in das eine Leuchtdiode 71 platziert wurde. Auf der dem Maßstab 78 zugewandten Seite des Halbleitersubstrats 72.1 sind strukturierte Fotodioden 73 mit einem der Empfangsgitterkonstanten entsprechenden Abstand voneinander in das Halbleitersubstrat 72.1 integriert. Über die dem Maßstab 78 zugewandte Seite des Halbleitersubstrats 72.1 ist eine für die Strahlung der Leuchtdiode 71 transparente Oxidschicht 75.1 gelegt. Über dieser Oxidschicht 75.1 ist eine Metallisierungsschicht 75.2 vorgesehen, die ein Sendegitter 74 beinhaltet, durch das die Strahlung der Leuchtdiode 71 hindurchtritt und dabei strukturiert wird. Danach folgt eine transparente Passivierungsschicht 75.3, durch die die Strahlung ebenfalls hindurchtritt.

Um die weiteren Baugruppen auf dem unmittelbar angrenzenden Halbleitersubstrat 72.2 vor der durch den Maßstab 78 reflektierten Strahlung der Leuchtdiode 71 zu schützen und um die mechanische Stabilität des Sendegitters 74 zu erhöhen, ist zwischen Halbleitersubstrat 72.1, 72.2 und Maßstab 78 eine flächige Baugruppe vorgesehen, die im Bereich des Sendegitters 74 und der Fotodioden 73 transparent, in den anderen Bereichen aber lichtundurchlässig beschichtet ist. Dies Baugruppe ist bevorzugt eine Glasplatte 76.1, die auf der dem Abtastkopf zugewandten Seite eine Beschichtung 76.2 aus Chrom trägt. Weiterhin kann die Glasplatte 76.1 eine Struktur aufweisen, so dass ein Vier-Gitter-Geber realisiert wird. Dadurch wird verhindert, dass Streulicht, das nicht nur vom Maßstab 78 reflektiertes Licht, sondern auch Umgebungslicht sein kann, auf die Baugruppen auf dem angrenzenden Halbleitersubstrat 72.2 einwirkt. Zusätzlich kann diese zusätzliche Baugruppe 76.1, 76.2 dazu benutzt werden, den Abtastkopf zu kontaktieren. Dafür sind auf der Glasplatte zusätzlich zu der lichtundurchlässigen Beschichtung 76.2 Leiterbahnen vorgesehen, um die in Figur 1 dargestellten Kontakte 103 per Flip-Chip Montage zu kontaktieren. Die lichtundurchlässige Beschichtung 76.2 und die Leiterbahnen auf der Glasplatte 76.1 sind dabei bevorzugt aus dem selben Material. Die zusätzliche Baugruppe kann optional über einen transparenten, nicht aushärtenden Kleber verbunden werden.

Im folgenden sollen die wesentlichen Verfahrensschritte zur Herstellung des Abtastkopfes beschrieben werden. Da als Grundmaterial Halbleitermaterial, bevorzugt Silizium, verwendet wird, sind die Verfahrensschritte zumindest ähnlich denen, die bei der Herstellung von integrierten Schaltungen angewendet werden.

In einem ersten Schritt wird davon ausgegangen, dass Halbleitermaterial in der für die Herstellung von integrierten Schaltungen erforderlichen Qualität, insbesondere bezüglich Reinheit, Oberflächengüte usw., vorliegt.

Anschließend werden die PN-Übergänge der Fotodioden 3 aus Figur 2 in das Halbleitermaterial 2 eindiffundiert, so dass die Fotodioden 3 und aufgrund deren Anordnung die strukturierten Fotodetektoren 102 gemäß Figur 1 entstehen. Die Breite und der Abstand zwischen den Fotodioden 3 aus Figur 2 wird dabei entsprechend der für das Empfangsgitter gewünschten Gitterkonstanten gewählt.

Im dritten Schritt wird eine Oxidschicht 5 aus SiO₂ mit einer Dicke von ca. 1 - 3 µm auf der Seite des Halbleitersubstrats 2 erzeugt, auf der sich die Fotodioden 3 befinden.

Anschließend wird im vierten Schritt eine Metallisierungsschicht auf die Oxidschicht aufgebracht. Diese Metallisierungsschicht wird in aus der Halbleiterherstellung bekannten fotochemischen Prozessen derart bearbeitet, dass das Sendegitter 4 mit der gewünschten Gitterkonstanten entsteht.

Schließlich wird in Schritt 5 noch eine Passivierungsschicht 7 mit einer Dicke von ca. 0,5 - 3 µm aufgebracht, die die Oberfläche schützt und insbesondere dem Sendegitter 4 zusätzliche mechanische Stabilität verleiht. Diese Passivierungsschicht 7 besteht bevorzugt aus Siliziumnitrit, Si₃N₄.

Nachdem die dem Maßstab 8 zugewandte Seite des Halbleitersubstrats 2 derart bearbeitet wurde, wird nunmehr auf der Rückseite der Halbleiter im Bereich des Sendegitters 4 anisotrop geätzt, so dass im Bereich des Sendegitters 4 kein Halbleitersubstrat 2 verbleibt. Es können auch andere Ätzverfahren wie isotropes Nassätzen oder Trockenätzen verwendet werden.

Im siebten und letzten Schritt wird der Halbleiter auf der Grundplatte 9 befestigt, auf der bereits die Leuchtdiode 1 angeordnet ist.

Bei den Ausführungsbeispielen gemäß Figur 3 und 7 ergeben sich zwangsläufig geringfügige Änderungen des Verfahrens. Bei dem Ausführungsbeispiel nach Figur 3 wird gleichzeitig mit dem Sendegitter 14.1 das Empfangsgitter 14.2 hergestellt.

Bei dem Ausführungsbeispiel nach Figur 7 entfallen die Bearbeitungsschritte 4 und 5. Der Bearbeitungsschritt 6 wird derart modifiziert, dass bei der anisotropen Ätzung im Bereich der dem Maßstab 58 zugewandten Seite des Halbleitersubstrats 52 noch Stege 52.1 verbleiben, die einen Abstand gemäß der gewünschten Gitterkonstanten des Sendegitters aufweisen. Die noch folgenden Bearbeitungsschritte werden wie bereits beschrieben durchgeführt.

Um die mechanische Stabilität zu erhöhen können auf die Metallisierungsschicht oder auf die Passivierungsschicht noch zusätzliche, transparente Schichten mit großer Dicke bis ca. 100 µm aufgebracht werden. Als Materialien eignen sich dafür Siliziumdioxid, Bor-Phosphorsilikatglas oder Solgele.

Das Messsystem kann sowohl ein eindimensionales Messsystem, wie Längen- und Winkelmesssysteme, als auch ein zweidimensionales Messsystem sein, wie ein Kreuzgittermesssystem, das als Maßstab ein Kreuzlinien- oder Schachbrettgitter aufweist. Das dafür erforderliche Abtastsystem weist entsprechend zwei, vorteilhaft orthogonal zueinander ausgerichtete Abtastköpfe auf. Alternativ können auch in einen Abtastkopf zwei Gruppen von Fotoelementen mit eindimensionaler Strukturierung integriert werden, deren Ausrichtung den Messrichtungen entsprechen oder die orthogonal zueinander stehen. Das Sendegitter wird dann als zweidimensionales Gitter, beispielsweise Kreuzlinien- oder Schachbrettgitter, ausgestaltet und ist dadurch nur einfach erforderlich.

## Patentansprüche

1. Messsystem bestehend aus
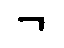 einem Maßstab (8, 18, 28, 38, 48, 58) mit einer Teilung und
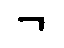 einem Abtastkopf (101), wobei der Abtastkopf (101) folgende Bestandteile umfasst:
- einen Trägerkörper (2, 12, 22, 32, 42, 52)
- mehrere Fotodetektoren (3, 13, 14.2, 23, 33, 43, 53), welche auf der Seite des Trägerkörpers (2, 12, 22, 32, 42, 52) angeordnet sind, die dem Maßstab (8, 18, 28, 38, 48, 58) zugewandt ist,
- ein Sackloch im Trägerkörper (2, 12, 22, 32, 42, 52), das auf der Seite, die dem Maßstab (8, 18, 28, 38, 48, 58) zugewandt ist, von einem Sendegitter (4, 14.1, 24, 34, 44, 52.1, 64, 74) berandet ist, welches zu den Fotodetektoren (3, 13, 14.2, 23, 33, 43, 53) symmetrisch ausgerichtet ist,
- eine Lichtquelle (1, 11, 21, 31, 41, 51, 61, 71), die im Abtastkopf auf der vom Maßstab (8, 18, 28, 38, 48, 58) abgewandten Seite des Sendegitters (4, 14.1, 24, 34, 44, 52.1, 64, 74) angeordnet ist,
**dadurch gekennzeichnet dass**,
der Trägerkörper (2, 12, 22, 32, 42, 52) ein Halbleitersubstrat ist und die Fotodetektoren (3, 13, 14.2, 23, 33, 43, 53) strukturiert ausgebildet und im Halbleitersubstrat integriert sind.

2. Messsystem nach Anspruch 1, **dadurch gekennzeichnet, dass** die Lichtquelle (1, 11, 21, 31, 41, 51, 61, 71) divergent ist und durch eine Leuchtdiode realisiert wird.

3. Messsystem nach einem der vorherigen Ansprüche, **dadurch gekennzeichnet, dass** bei der dem Maßstab (8, 18, 28, 38, 48, 58, 68, 78) zugewandten Seite des Halbleitersubstrats (2, 12, 22, 32, 42, 52, 62, 72.1) mindestens eine für die Lichtquelle (1, 11, 21, 31, 41, 51, 61, 71) zumindest teilweise transparente Schicht (5, 6, 7, 15, 16, 17, 25, 26, 27, 35, 36, 37, 45, 46, 47, 55, 65, 66, 67, 75.1, 75.2, 75.3, 76.1) angeordnet ist.

4. Messsystem nach Anspruch 3, **dadurch gekennzeichnet, dass** auf dem Halbleitersubstrat (2, 12, 22, 32, 42, 52, 62, 72.1) aus Silizium eine für die Lichtquelle (1, 11, 21, 31, 41, 51, 61, 71) zumindest teilweise transparente Schicht (5, 6, 7, 15, 16, 17, 25, 26, 27, 35, 36, 37, 45, 46, 47, 55, 65, 66, 67, 75.1, 75.2, 75.3, 76.1) aufgebracht ist, welche aus Siliziumdioxid besteht.

5. Messsystem nach einem der vorherigen Ansprüche, **dadurch gekennzeichnet, dass** das Sendegitter (4, 14.1, 24, 34, 44, 52.1, 64, 74) entweder aus beim Einbringen des Sacklochs stehengelassenen Stegen (52.1) des Halbleitersubstrats (2, 12, 22, 32, 42, 52, 62, 72.1) oder durch Metallstege einer zusätzlich aufgebrachten Metallisierungsschicht (6, 16, 26, 35, 46, 66, 75.2) realisiert ist.

6. Messsystem nach einem der vorherigen Ansprüche, **dadurch gekennzeichnet, dass** auf dem Halbleitersubstrat (2, 12, 22, 32, 42, 52) eine Oxidschicht (5, 15, 25, 35, 45, 65, 75.1) und darauf eine Metallisierungsschicht (6, 16, 26, 36, 46, 66, 75.2) aufgetragen ist, auf welcher eine Passivierungsschicht (7, 17, 27, 37, 47, 55, 67, 75.3) aufgebracht ist.

7. Messsystem nach einem der vorherigen Ansprüche, **dadurch gekennzeichnet, dass** die strukturierten Fotodetektoren (13, 14.2) durch Fotodioden (13) ausgebildet sind und über den Fotodioden (13) ein Empfangsgitter (14.2) angeordnet ist, das aus Metallstegen der Metallisierungsschicht (16) besteht.

8. Messsystem nach einem der vorherigen Ansprüche, **dadurch gekennzeichnet, dass** die strukturierten Fotodetektoren (3, 23, 33, 43, 53, 63, 73) als Fotodioden ausgebildet sind, deren Breite und Abstand entsprechend der gewünschten Gitterkonstante für das Empfangsgitter dimensioniert sind.

9. Messsystem nach einem der vorherigen Ansprüche, **dadurch gekennzeichnet, dass** die des Halbleitersubstrats (2, 12, 22, 32, 42, 52, 62, 72.1) im Bereich des Sacklochs eine Beschichtung (22.1, 69.2) aufweisen, die für das von der Lichtquelle (1, 11, 21, 31, 41, 51, 61, 71) emittierte Licht undurchlässig und/oder reflektierend ist.

10. Messsystem nach einem der vorherigen Ansprüche, **dadurch gekennzeichnet, dass** im Bereich des Sacklochs mehrere optisch opake Stege (42.1) vorhanden sind, die eine Verbindung mit einer Oxidschicht (5, 15, 25, 35, 45, 65, 75.1) aufweisen und einen im Vergleich zum Sendegitter (4, 14.1, 24, 34, 44, 52.1, 64, 74) großen Abstand zueinander aufweisen.

11. Messsystem nach Anspruch 1 oder 2, **dadurch gekennzeichnet, dass** die Lichtquelle auf einer Grundplatte (9, 19, 29, 39, 49, 59, 69, 69.1, 79) platziert ist, die auf der dem Maßstab (8, 18, 28, 38, 48, 58, 68, 78) abgewandten Seite des Halbleitersubstrats (2, 12, 22, 32, 42, 52, 62, 72.1) angeordnet ist.

12. Messsystem nach einem der vorherigen Ansprüche, **dadurch gekennzeichnet, dass** die Lichtquelle mittels eines Klebers (32.1), der die optischen Strahlen der Lichtquelle zum Sendegitter (4, 14.1, 24, 34, 44, 52.1, 64, 74) leitet, mit dem Sendegitter (4, 14.1, 24, 34, 44, 52.1, 64, 74) verbunden ist und der verbleibende Raum des Sacklochs mittels einer opaken Füllmasse (32.2) im wesentlichen vollständig ausgefüllt ist.

13. Messsystem nach einem der vorherigen Ansprüche, **dadurch gekennzeichnet, dass** die Lichtquelle in einer Aussparung (69.1) in der Grundplatte (69) angeordnet ist.

14. Messsystem nach einem der vorherigen Ansprüche, **dadurch gekennzeichnet, dass** auf der dem Maßstab (8, 18, 28, 38, 48, 58, 68, 78) zugewandten Seite einer Passivierungsschicht (7, 17, 27, 37, 47, 55, 67, 75.3) ein Träger (76.1) mit einer in Teilbereichen lichtundurchlässigen Beschichtung (76.2) angeordnet ist.

15. Messsystem nach Anspruch 14, **dadurch gekennzeichnet, dass** der Träger (76.1) aus Glas und einer Beschichtung (76.2) aus einem leitenden Material besteht, und dass die Beschichtung (76.2) zumindest teilweise als Leiterbahnen für Zu- und Ableitungen der elektrischen Signale des Abtastkopfes dienen.

16. Messsystem nach einem der vorherigen Ansprüche, **dadurch gekennzeichnet, dass** ein Fotodetektor (3, 13, 14.2, 23, 33, 43, 53, 63, 73) aus mindestens einer Fotodiode besteht und dass die Fotodetektoren (3, 13, 14.2, 23, 33, 43, 53, 63, 73) um eine viertel Periode eines Empfangsgitters oder der Struktur der strukturierten Fotodetektoren (3, 13, 14.2, 23, 33, 43, 53, 63, 73) zueinander in Messrichtung versetzt angeordnet sind.

## Claims

1. Measuring system comprising
- a scale (8, 18, 28, 38, 48, 58) with a graduation and
- a reading head (101), the reading head (101) comprising the following components:
- a carrier body (2, 12, 22, 32, 42, 52),
- a plurality of photodetectors (3, 13, 14.2, 23, 33, 43, 53) which are disposed on the side of the carrier body (2, 12, 22, 32, 42, 52) which is orientated towards the scale (8, 18, 28, 38, 48, 58),
- a blind hole in the carrier body (2, 12, 22, 32, 42, 52) which, on the side orientated towards the scale (8, 18, 28, 38, 48, 58), is bordered by a transmitter grating (4, 14.1, 24, 34, 44, 52.1, 64, 74) which is symmetrically aligned relative to the photodetectors (3, 13, 14.2, 23, 33, 43, 53),
- a light source (1, 11, 21, 31, 41, 51, 61, 71) disposed in the reading head on the side of the transmitter grating (4, 14.1, 24, 34, 44, 52.1, 64, 74) which is orientated away from the scale (8, 18, 28, 38, 48, 58),
**characterised in that**
the carrier body (2, 12, 22, 32, 42, 52) is a semiconductor substrate and the photodetectors (3, 13, 14.2, 23, 33, 43, 53) are configured in a structured manner and integrated in the semiconductor substrate.

2. Measuring system according to claim 1, **characterised in that** the light source (1, 11, 21, 31, 41, 51, 61, 71) is divergent and is produced by means of a light diode.

3. Measuring system according to one of the preceding claims, **characterised in that**, in the case of the side of the semiconductor substrate (2, 12, 22, 32, 42, 52, 62, 72.1) which is orientated towards the scale (8, 18, 28, 38, 48, 58, 68, 78), there is disposed at least one layer (5, 6, 7, 15, 16, 17, 25, 26, 27, 35, 36, 37, 45, 46, 47, 55, 65, 66, 67, 75.1, 75.2, 75.3, 76.1) which is at least partially transparent for the light source (1, 11, 21, 31, 41, 51, 61, 71).

4. Measuring system according to claim 3, **characterised in that**, on the semiconductor substrate (2, 12, 22, 32, 42, 52, 62, 72.1) made of silicon, there is deposited a layer (5, 6, 7, 15, 16, 17, 25, 26, 27, 35, 36, 37, 45, 46, 47, 55, 65, 66, 67, 75.1, 75.2, 75.3, 76.1) which is at least partially transparent for the light source (1, 11, 21, 31, 41, 51, 61, 71) and is made of silicon dioxide.

5. Measuring system according to one of the preceding claims, **characterised in that** the transmitter grating (4, 14.1, 24, 34, 44, 52.1, 64, 74) is produced either by webs (52.1) of the semiconductor substrate (2, 12, 22, 32, 42, 52, 62, 72.1) which are left untouched during introduction of the blind hole or by means of metal webs of an additionally applied metallisation layer (6, 16, 26, 35, 46, 66, 75.2).

6. Measuring system according to one of the preceding claims, **characterised in that** an oxide layer (5, 15, 25, 35, 45, 65, 75.1) is applied on the semiconductor substrate (2, 12, 22, 32, 42, 52) and a metallisation layer (6, 16, 26, 36, 46, 66, 75.2) is applied thereupon on which a passivation layer (7, 17, 27, 37, 47, 55, 67, 75.3) is deposited.

7. Measuring system according to one of the preceding claims, **characterised in that** the structured photodetectors (13, 14.2) are configured by means of photodiodes (13) and a receiver grating (14.2) is disposed above the photodiodes (13), which grating comprises metal webs of the metallisation layer (16).

8. Measuring system according to one of the preceding claims, **characterised in that** the structured photodetectors (3, 23, 33, 43, 53, 63, 73) are configured as photodiodes, the width and spacing of which are dimensioned corresponding to the desired grating constant for the receiver grating.

9. Measuring system according to one of the preceding claims, **characterised in that** the delimiting surfaces of the semiconductor substrate (2, 12, 22, 32, 42, 52, 62, 72.1) have a coating (22.1, 69.2) in the region of the blind hole, which coating is impermeable and/or reflecting for the light which is emitted from the light source (1, 11, 21, 31, 41, 51, 61, 71).

10. Measuring system according to one of the preceding claims, **characterised in that** a plurality of optically opaque webs (42.1) is present in the region of the blind hole, which webs have a connection to an oxide layer (5, 15, 25, 35, 45, 65, 75.1) and have a greater spacing from each other compared to the transmitter grating (4, 14.1, 24, 34, 44, 52.1, 64, 74).

11. Measuring system according to claim 1 or 2, **characterised in that** the light source is placed on a baseplate (9, 19, 29, 39, 49, 59, 69, 69.1, 79) which is disposed on the side of the semiconductor substrate (2, 12, 22, 32, 42, 52, 62, 72.1) which is orientated away from the scale (8, 18, 28, 38, 48, 58, 68, 78).

12. Measuring system according to one of the preceding claims, **characterised in that** the light source is connected to the transmitter grating (4, 14.1, 24, 34, 44, 52.1, 64, 74) by means of an adhesive (32.1) which conducts the optical beams of the light source to the transmitter grating (4, 14.1, 24, 34, 44, 52.1, 64, 74) and the remaining space of the blind hole is substantially completely filled by means of an opaque filler (32.2).

13. Measuring system according to one of the preceding claims, **characterised in that** the light source is disposed in a recess (69.1) in the baseplate (69).

14. Measuring system according to one of the preceding claims, **characterised in that** a carrier (76.1) with a coating (76.2) which is impermeable to light in partial regions is disposed on the side of a passivation layer (7, 17, 27, 37, 47, 55, 67, 75.3) which is orientated towards the scale (8, 18, 28, 38, 48, 58, 68, 78).

15. Measuring system according to claim 14, **characterised in that** the carrier (76.1) comprises glass and a coating (76.2) made of a conducting material, and **in that** the coating (76.2) serves at least partially as conducting paths for receiving and delivering the electrical signals of the reading head.

16. Measuring system according to one of the preceding claims, **characterised in that** one photodetector (3, 13, 14.2, 23, 33, 43, 53, 63, 73) comprises at least one photodiode, and **in that** the photodetectors (3, 13, 14.2, 23, 33, 43, 53, 63, 73) are disposed at a quarter period of a receiver grating or of the structure of the structured photodetectors (3, 13, 14.2, 23, 33, 43, 53, 63, 73), offset relative to each other in the measuring direction.

## Revendications

1. Système de mesure comprenant
- une règle de mesure (8, 18, 28, 38, 48, 58) portant une division et
- une tête d'exploration (101), la tête d'exploration comprenant
- un corps de support (2, 12, 22, 32, 42, 52),
- plusieurs photodétecteurs (3, 13, 14.2, 23, 33, 43, 53) disposés sur le côté du corps de support (2, 12, 22, 32, 42, 52), qui est tourné vers la règle de mesure (8, 18, 28, 38, 48, 58),
- un trou borgne ménagé dans le corps de support (2, 12, 22, 32, 42, 52) et entouré sur le côté tourné vers la règle de mesure (8, 18, 28, 38, 48, 58) par un réseau d'émission (4, 14.1, 24, 34, 44, 52.1, 64, 74) qui est disposé symétriquement par rapport aux photodétecteurs (3, 13, 14.2, 23, 33, 43, 53),
- une source de lumière (1, 11, 21, 31, 41, 51, 61, 71) qui est disposée dans la tête d'exploration sur le côté du réseau d'émission (4, 14.1, 24, 34, 44, 52.1, 64, 74) de la règle de mesure (8, 18, 28, 38, 48, 58),
**caractérisé par le fait que**
le corps de support (2, 12, 22, 32, 42, 52) est un substrat semi-conducteur et que les photodétecteurs (3, 13, 14.2, 23, 33, 43, 53) sont structurés et intégrés au substrat semi-conducteur.

2. Système de mesure suivant la revendication 1, **caractérisé par le fait que** la source de lumière (1, 11, 21, 31, 41, 51, 61, 71) est divergente et est réalisée par une diode luminescente.

3. Système de mesure suivant l'une des revendications précédentes, **caractérisé par le fait qu'**au moins une couche (5, 6, 7, 15, 16, 17, 25, 26, 27, 35, 36, 37, 45, 46, 47, 55, 65, 66, 67, 75.1, 75.2, 75.3, 76.1) au moins partiellement transparente pour la source de lumière (1, 11, 21, 31, 41, 51, 61, 71) est disposée sur le côté du substrat semi-conducteur (2, 12, 22, 32, 42, 52, 62, 72.1) tourné vers la règle de mesure (8, 18, 28, 38, 48, 58, 68, 78),

4. Système de mesure suivant la revendication 3, **caractérisé par le fait que** sur le substrat semi-conducteur (2, 12, 22, 32, 42, 52, 62, 72.1) en silicium porte une couche (5, 6, 7, 15, 16, 17, 25, 26, 27, 35, 36, 37, 45, 46, 47, 55, 65, 66, 67, 75.1, 75.2, 75.3, 76.1) en dioxyde de silicium au moins partiellement transparente pour la source de lumière (1, 11, 21, 31, 41, 51, 61, 71).

5. Système de mesure suivant l'une des revendications précédentes, **caractérisé par le fait que** le réseau d'émission (4, 14, 24, 34, 44, 52.1, 64, 74) est réalisé soit par des barrettes (52.1) du substrat semi-conducteur (2, 12, 22, 32, 42, 52, 62, 72.1) réservées lors de l'aménagement du trou borgne, soit par des barrettes de métal d'une couche de métallisation (6, 16, 26, 35, 46, 66, 75.2) appliquée en supplément.

6. Système de mesure suivant l'une des revendications précédentes, **caractérisé par le fait que** le substrat semi-conducteur (2, 12, 22, 32, 42, 52) porte une couche d'oxyde (5, 15, 25, 35, 45, 65, 75.1) recouverte d'une couche de métallisation (6, 16, 26, 36, 46, 66, 75.2) elle-même recouverte d'une couche de passivation (7, 17, 27, 37, 47, 55, 67, 75.3).

7. Système de mesure suivant l'une des revendications précédentes, **caractérisé par le fait que** les photodétecteurs structurés (13, 14.2) sont constitués par des photodiodes (13) et qu'au-dessus des photodiodes (13) est disposé un réseau de réception (14.2) constitué par des barrettes de métal de la couche de métallisation (16).

8. Système de mesure suivant l'une des revendications précédentes, **caractérisé par le fait que** les photodétecteurs structurés (3, 23, 33, 43, 53, 63, 73) sont constitués par des photodiodes dont la largeur et la distance réciproque sont dimensionnées en fonction de la constante de réseau recherchée pour le réseau de réception.

9. Système de mesure suivant l'une des revendications précédentes, **caractérisé par le fait que** les surfaces de délimitation du substrat semi-conducteur (2, 12, 22, 32, 42, 52, 62, 72.1) présentent dans la zone du trou borgne un revêtement (22.1, 69.2) qui est imperméable et/ou réfléchissant pour la lumière émise par la source de lumière (1, 11, 21, 31, 41, 51, 61, 71).

10. Système de mesure suivant l'une des revendications précédentes, **caractérisé par le fait que** dans la zone du trou borgne sont prévues plusieurs barrettes (42.1) optiquement opaques qui présentent une liaison avec une couche d'oxyde (5, 15, 25, 35, 45, 65, 75.1) et présentent entre elles une distance qui est importante en comparaison avec le réseau d'émission (4, 14, 24, 34, 44, 52.1, 64, 74).

11. Système de mesure suivant la revendication 1 ou 2, **caractérisé par le fait que** la source de lumière est placée sur une plaque de base (9, 19, 29, 39, 49, 59, 69, 69.1, 79) disposée sur le côté du substrat semi-conducteur (2, 12, 22, 32, 42, 52, 62, 72.1) qui est éloigné de la règle de mesure (8, 18, 28, 38, 48, 58, 68, 78),

12. Système de mesure suivant l'une des revendications précédentes, **caractérisé par le fait que** la source de lumière est reliée au réseau d'émission (4, 14, 24, 34, 44, 52.1, 64, 74) à l'aide d'une colle (32.1) qui conduit les rayons optiques de la source de lumière vers le réseau d'émission (4, 14, 24, 34, 44, 52.1, 64, 74) et que le volume restant du trou borgne est rempli de façon essentiellement complète à l'aide d'une masse de remplissage (32.2) opaque.

13. Système de mesure suivant l'une des revendications précédentes, **caractérisé par le fait que** la source de lumière est disposée dans une échancrure (69.1) dans la plaque de base (69).

14. Système de mesure suivant l'une des revendications précédentes, **caractérisé par le fait qu'**un support (76.1) avec un revêtement (76.2) imperméable à la lumière dans des zones partielles est disposé sur le côté d'une couche de passivation (7, 17, 27, 37, 47, 55, 67, 75.3) qui est tourné vers la règle de mesure (8, 18, 28, 38, 48, 58, 68, 78).

15. Système de mesure suivant la revendication 14, **caractérisé par le fait que** le support (76.1) est en verre avec un revêtement (76.2) en un matériau conducteur et que le revêtement (76.2) est réalisé au moins en partie sous forme de pistes conductrices pour conduire les signaux électriques de la tête exploration.

16. Système de mesure suivant l'une des revendications précédentes, **caractérisé par le fait qu'**un photodétecteur (3, 13, 14.2, 23, 33, 43, 53, 63, 73) est constitué par au moins une photodiode et que les photodétecteurs (3, 13, 14.2, 23, 33, 43, 53, 63, 73) sont disposés en étant décalés réciproquement dans la direction de mesure d'un quart de période d'un réseau de réception ou de la structure des photodétecteurs structurés (3, 13, 14.2, 23, 33, 43, 53, 63, 73).
